# EUROPEAN PATENT APPLICATION

(11) **EP 1 939 724 A2**
(43) Date of publication of application: **02.07.2008**
(21) Application number: 07123712.7
(22) Date of filing: 19.12.2007
(51) Int. Cl.: G06F 3/14, G09G 5/00

(54) **Display apparatus and driving method of display apparatus**

(30) Priority: 27.12.2006 KR 20060135045; 23.03.2007 KR 20070028619
(71) Applicant: Samsung Electronics Co., Ltd., Suwon-si Gyeonggi-do 443-742 (KR)
(72) Inventor: Kang, Hee-young, Gyeonggi-do (KR)
(74) Representative: Grootscholten, Johannes A.M.

(57) **Abstract**

A display apparatus, includes: a display unit which displays an image thereon; a first communicator which communicates with an image-supplying apparatus supplying an image to be displayed on the display unit; a display memory which stores a driver installation file therein to display the image; and a display controller which controls the first communicator to transmit the driver installation file stored in the display memory to the image-supplying apparatus.

## Description

### BACKGROUND

### Field of the Invention

Apparatuses and methods consistent with the present invention relate to a display apparatus and a driving method of the display apparatus.

### Description of the Related Art

Generally, an image-supplying apparatus such as a computer is installed with a driver for a display apparatus to display an image on the display apparatus when being initially connected. The display apparatus's driver is stored on a storage medium such as a compact disk (CD) to be supplied by a user. A user installs the driver stored in the storage medium in the image-supplying apparatus through a reading unit such as a CD drive. Such a process is performed when an operating system (OS) is installed on the image-supplying apparatus, and when the display apparatus is initially connected with the image-supplying apparatus. The driver may also be installed to update an older driver or to replace a malfunctioning driver, as well as for the initial connection between the display apparatus and the image-supplying apparatus. Recently, operating systems have improved their functionality by including drivers having at least the minimum functionality needed to display an image on the display apparatus, even across various kinds of display apparatuses. However, the generic driver has minimum functionality, and the image-supplying apparatus should ideally have a driver which is able to utilize the functions of the connected display apparatus to the maximum. If the image-supplying apparatus is connected with the display apparatus, the image-supplying apparatus should install a driver which is optimized to the display apparatus to display an image thereon. As the driver is stored in an additional storage medium, the image-supplying apparatus should utilize the storage medium to install the driver therein.

As described above, a conventional image-supplying apparatus must utilize an additional storage medium storing the driver to install the driver optimized to the display apparatus, adding complications for the user.

### SUMMARY

Accordingly, it is an aspect of the present invention to provide a display apparatus which includes built-in memory storing an optimized driver to be transmitted to and installed on an image-supplying apparatus when connected with the image-supplying apparatus, and a method of installing a driver for a display apparatus.

Additional aspects and/or advantages of the present invention will be set forth in part in the description which follows and, in part, will be obvious from the description, or may be learned by practice of the present invention.

The foregoing and/or other aspects of the present invention can be achieved by providing a display apparatus, including: a display unit which displays an image thereon; a first communicator which communicates with an image-supplying apparatus supplying an image to be displayed on the display unit; a display memory which stores a driver installation file therein; and a display controller which controls the first communicator to transmit the driver installation file stored in the display memory to the image-supplying apparatus.

The display controller installs the driver in response to a user's command. The display apparatus may comprise an interface generator which generates a user interface screen concerning the driver installation file on the display unit according to a control of the display controller.

The display controller may transmit the driver installation file to the image-supplying apparatus if the image-supplying apparatus is connected with the display apparatus through the first communicator.

The display controller may transmit the driver installation file to the image-supplying apparatus if the display apparatus receives a request signal from the image-supplying apparatus through the first communicator.

The display controller may not transmit the driver installation file to the image-supplying apparatus if the request signal is not received from the image-supplying apparatus when communication is resumed with the image-supplying apparatus through the first communicator after the display controller has been disconnected from the image-supplying device.

The display controller may store transmission information on the driver installation file, and transmit the driver installation file to the image-supplying apparatus based on the stored transmission information on the driver installation file.

The first communicator may communicate with the image-supplying apparatus through a universal serial bus (USB) transmission method.

The display apparatus may comprise an image processor which processes an image supplied by the image-supplying apparatus through the first communicator.

The display apparatus may comprise a second communicator which communicates with the image-supplying apparatus in a transmission method different from that of the first communicator, wherein the display controller controls the image processor to process an image supplied by the image-supplying apparatus and display the image on the display unit.

The second communicator may comprise at least one of a digital visual interface (DVI) transmission method to transmit and receive digital and analog signals, and a D-Sub transmission method to transmit and receive an analog signal.

The foregoing and/or other aspects of the present invention can be achieved by providing a driving method on an image-supplying apparatus for a display apparatus which displays an image being supplied form the image-supplying apparatus, the method including: (a) transmitting driver installation file stored in the display apparatus to the image-supplying apparatus; and (b) display an image based on a video signal received by a transmission method previously set in the image-supplying apparatus.

The step of (a) may comprise allowing the driver installation file to be transmitted and installed to the image-supplying apparatus and storing information on whether the driver has been installed in the image-supplying apparatus.

The display apparatus and the image-supplying apparatus communicate with each other through a universal serial bus (USB) transmission method.

The image-supplying apparatus communicate with each other through a universal serial bus (USB) transmission method.

The foregoing and/or other aspects of the present invention can be achieved by providing an image-supplying apparatus, including: a first connector which transmits and receives data with respect to a display apparatus; and a controller which receives a driver installation file from the display apparatus through the first connector and installs the driver if the image-supplying apparatus is connected with the display apparatus through the first connector.

The controller stores information on whether the driver has been installed after having installed the driver The first connector communicates with the display apparatus through the USB transmission method.

The image-supplying apparatus may comprise a second connector which communicates with the display apparatus through a transmission method different from that of the first connector, wherein the controller transmits image data to the display apparatus through at least one of the first and second connectors.

### BRIEF DESCRIPTION OF THE DRAWINGS

The above and/or other aspects and advantages of the present invention will become apparent and more readily appreciated from the following description of the exemplary embodiments, taken in conjunction with the accompanying drawings of which:
FIG. 1 is a perspective view of a display apparatus according to an exemplary embodiment of the present invention, when being connected with an image-supplying apparatus;
FIG. 2 is a block diagram of the display apparatus and the image-supplying apparatus according to the exemplary embodiment of the present invention;
FIG. 3 is a block diagram of a first display apparatus and a second display apparatus according to the exemplary embodiment of the present invention, when being connected with an image-supplying apparatus;
FIG. 4 is a flowchart which illustrates a method of installing a driver for the display apparatus according to the exemplary embodiment of the present invention, when being initially connected with the image-supplying apparatus through a universal serial bus (USB) transmission method; and
FIG. 5 is a flowchart which illustrates a method of installing the driver for the display apparatus according to the exemplary embodiment of the present invention, when the connection between the image-supplying apparatus and the display apparatus through the USB transmission method is resumed after having been cut off.

### DETAILED DESCRIPTION OF EXEMPLARY EMBODIMENTS

Hereinafter, exemplary embodiments of the present invention will be described with reference to accompanying drawings, wherein like numerals refer to like elements and repetitive descriptions will be avoided as necessary.

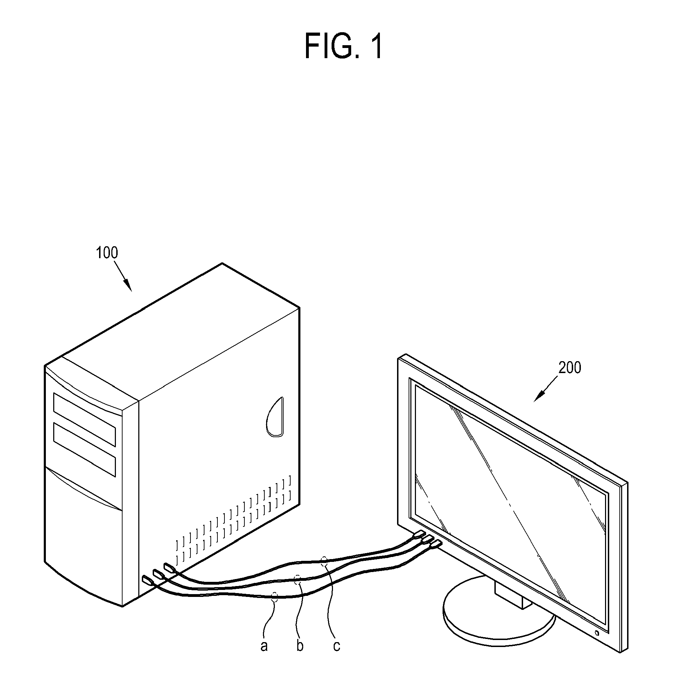

FIG. 1 is a perspective view of a display apparatus according to a first exemplary embodiment of the present invention, when connected with an image-supplying apparatus.

As shown therein, a display apparatus 200 may be connected with an image-supplying apparatus 100 such as a computer main body through at least one of a D-Sub cable a, a digital visual interface (DVI) cable b and a universal serial bus (USB) cable c. The image-supplying apparatus 100 may transmit at least one of video signals and audio signals to the display apparatus 200 through one of the cables a, b and c. The display apparatus 200 processes the image and audio signals supplied by the image-supplying apparatus 100 to output them through a monitor and speaker.

After receiving a video signal from the image-supplying apparatus 100 through the cables a, b and c, the display apparatus 200 processes the video signals, and outputs them to a display module. The display module includes modules such as a plasma display panel (PDP), a liquid crystal display (LCD), an organic light emitting diode (OLED), and other known display devices able to display an image thereon.

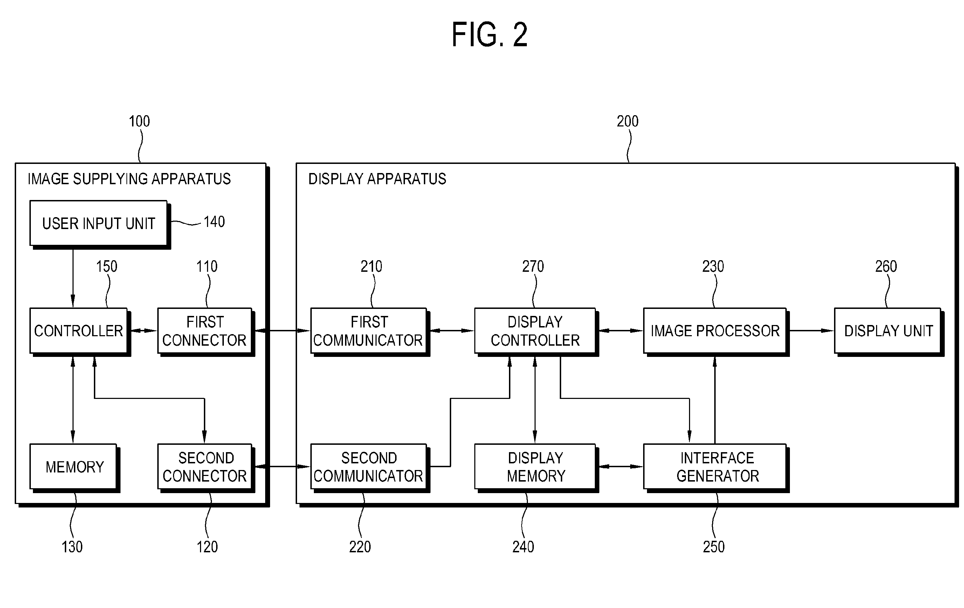

FIG. 2 is a block diagram of the display apparatus 200 and the image-supplying apparatus 100 according to the first exemplary embodiment of the present invention.

As shown therein, the image-supplying apparatus 100 includes a first connector 110, a second connector 120, a memory unit 130, a user input unit 140, and a controller 150 which controls the foregoing elements.

The first connector 110 is connected with the display apparatus 200 through the USB cable c, and receives and transmits video signals, audio signals and other control signals with respect to the display apparatus 200 through the USB transmission method.

The second connector 120 receives and transmits at least one of video signals, audio signals and other control signals with respect to the display apparatus 200 through another transmission method different from that of the first connector 110. The transmission method of the second connector 120 may be achieved by at least one of D-Sub, DVI, HDMI, and an optical cable. Alternatively, the second connector 120 may employ other methods besides the foregoing methods.

The image-supplying apparatus 100 supplies at least one of video signals, audio signals and other control signals to the display apparatus 200 through one of the first and second connectors 110 and 120.

The display apparatus 200 processes the video signals or audio signals supplied through one of the first and second connectors 110 and 120, and outputs them through a display unit 260 and an audio output unit (not shown) such as a speaker.

The memory 130 stores various data including the information on whether there has been installed, in the image-supplying apparatus 100, a driver for the display apparatus 200 connected through the first connector 110, i.e., when the display apparatus 200 has been connected by the USB transmission method.

If the image-supplying apparatus 100 is connected with the display apparatus 200 through the USB transmission method, the controller 150 needs to install the driver for the display apparatus 200 to display an image on the display apparatus 200. That is, if the image-supplying apparatus 100 is connected with the display apparatus 200 through the first connector 110, the controller 150 receives a driver installation file for the display apparatus 200 from the display apparatus 200. Then, the controller 150 installs the received driver, and then stores the driver installation information in the memory 130. If the connection between the image-supplying apparatus 100 and the display apparatus 200 is resumed after having been cut off, the controller 150 checks the driver installation information stored in the memory 130. If the driver installation information is found to be set as "driver installed," the controller 150 transmits a signal to the display apparatus 200 to stop transmitting the driver installation file, or discards the received driver installation file. Here, the driver installation file includes the driver itself and the installing file to install the driver.

The user input unit 140 receives commands from a user, and includes a keyboard, a mouse, etc. A user may command the controller 150 to install the driver for the display apparatus 200 connected through the first connector 110, through the user input unit 140.

As described above, the image-supplying apparatus 100 and the display apparatus 200 may be connected with each other through at least one of the first and second connectors 110 and 120. That is, the image-supplying apparatus 100 transmits and receives at least one of video signals, audio signals and other control signals with respect to the display apparatus 200 through at least one of D-Sub, DVI and USB transmission methods.

The display apparatus 200 includes a first communicator 210, a display memory 240, an image processor 230, a display unit 260, a second communicator 220, and a display controller 270 which controls the foregoing elements.

The first communicator 210 is connected with the first connector 110 through the USB cable c (refer to FIG. 1). That is, the first communicator 210 and the first connector 110 include a USB port to connect the USB cable a thereto. The image-supplying apparatus 100 and the display apparatus 200 communicate with each other through the USB cable to receive and transmit video signals, audio signals and other control signals.

The image processor 203 in the display apparatus 200 may include a decoder (not shown) to process USB-format data received through the USB cable.

The second communicator 220 is connected with the second connector 120 through the D-Sub and DVI cables a and b (refer to FIG. 1). The second communicator 220 and the second connector 120 include a port to connect the D-Sub cable and the DVI cable thereto. The second communicator 220 and the second connector 120 may be connected with each other through at least one of the D-Sub and DVI cables b and c.

The display controller 270 receives the video signals and audio signals from one of the first and second communicators 210 and 220 to process the signals. If the received signal includes a video signal, the display controller 270 controls the image processor 230 to process the video signal and display an image on the display unit 260.

If at least one of the first and second communicators 210 and 220 supply the video signal, the display controller 270 controls the image processor 230 to process the video signals and display an image corresponding the processed video signal, on the display unit 260.

The display memory 240 stores the driver installation file therein to communicate with the image-supplying apparatus 100 in USB transmission method. After transmitting the driver installation file to the image-supplying apparatus 100, the display controller 270 may store information on whether the driver installation file has been transmitted, in the display memory 240. The interface generator 250 generates a predetermined interface and transmits the interface to the image processor 230 according to the control of the display controller 270. The image processor 230 receives the interface screen and displays it on the display unit 260. Upon receiving the video signal at this time, the image processor 230 mixes the video signal and the interface screen to be displayed on the display unit 260. Here, the interface screen may be called an on screen display (OSD).

The driver installation for the display apparatus 200 using the USB transmission method may be performed after the setting information about the display apparatus 200, e.g. extended display identification data (EDID) transmitted by one of D-Sub, DVI and USB transmission methods is set in the image-supplying apparatus 100. Further, the controller 150 of the image-supplying apparatus 100 may receive the driver installation file for the display apparatus 200 and the setting information of the display apparatus 200, which are of the USB format, through the second connector 120.

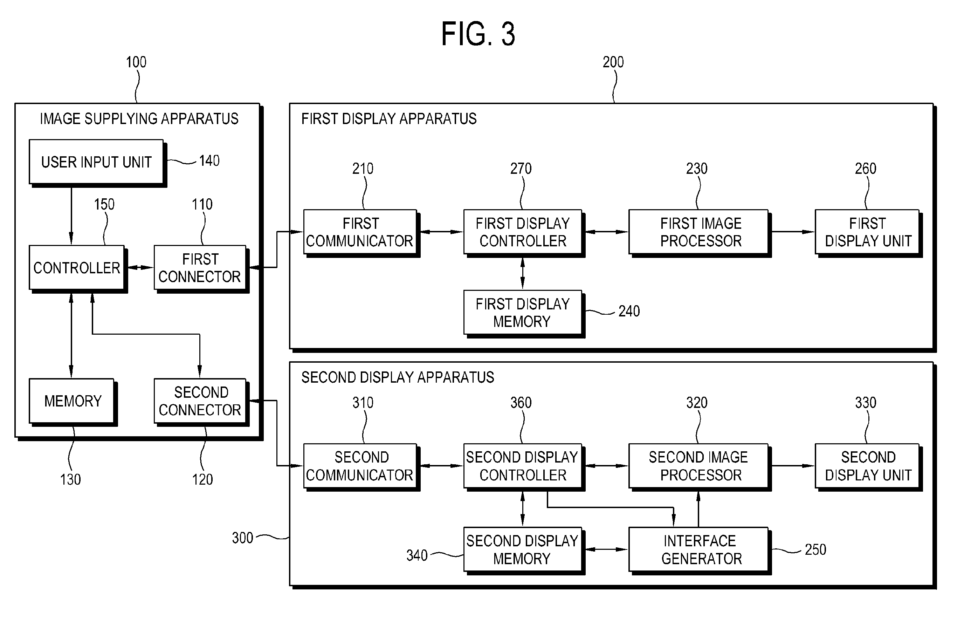

Hereinafter, the features according to a second exemplary embodiment of the present invention will be described with reference to FIG. 3..

Below, the image-supplying apparatus 100 and first and second display apparatuses 200 and 300 will be described as a computer and monitors by way of example, respectively.

The image-supplying apparatus 100 transmits and receives data with respect to the first display apparatus 200 through the USB transmission methods, and transmits and receives data with respect to the second display apparatus 300 through at least one of D-Sub and DVI. Here, the data include video signals, audio signals, control signals and data signals.

The image-supplying apparatus 100 is connected with the second display apparatus 300 through at least one of the D-Sub and DVI transmission methods available to the second connector 120. After the computer main body 100 is connected with the second display apparatus display300, a second display controller 370 transmits setting information about the second display apparatus 300 to the image-supplying apparatus 100 through the second communicator 220. The controller 150 receives the setting information through the second connector 120. The controller 150 optimizes the video signal to display an image on the second display apparatus 300 with the setting information from the second display apparatus 300, and transmits the video signal to the second display apparatus 300 through the second connector 120.

While the image-supplying apparatus 100 and the second display apparatus 300 are connected with each other through the second connector 120 and the second communicator 220, a user connects the USB cable to the first connector 110 and the first communicator 210. Then, the image-supplying apparatus 100 and the first display apparatus 200 may communicate with each other through the USB transmission method. That is, if a user connects the image-supplying apparatus 100 and the first display apparatus 200 through the USB cable, the controller 150 recognizes that the USB cable is connected with the first connector 110, and transmits a signal through the second connector 120 to the display apparatus 200 to inform that the image-supplying apparatus 100 and the second display apparatus 300 are connected with each other. The second display controller 360 receives the signal, and controls the interface generator 250 to generate the interface screen including an item to indicate whether the driver for the USB transmission method has been installed.

The interface generator 250 generates the interface screen including the driver installation item and transmits the interface screen to the second image processor 320. The second image processor 320 displays the interface screen on the second display unit 330. Then, a user inputs an installation command through the interface screen displayed on the second display unit 330. The controller 150 recognizes the user's command and requests the first display controller 270 to transmit the driver installation file through the first communicator 210. The first display controller 270, which receives the request, transmits the driver installation file stored in the first display memory 240 to the computer main body 100 through the second communicator 220. Then, the first display controller 270 may store the transmission information on the driver installation file in the first display memory 240.

The controller 150 receives the driver installation file from the first display apparatus 200 through the first connector 110, and installs the driver by using the driver installation file. The foregoing operation is performed by an operation system (OS) such as Windows by way of example. According to the exemplary embodiment of the present invention, the interface screen displayed on the second display apparatus 300 may be generated by an OSD generating unit provided in the second display apparatus 300 or by software executed under the operating system (OS) provided in the image-supplying apparatus 100 such as a personal computer. Then, the first display apparatus 200 processes and outputs the image and the audio signal received from the first display apparatus 200.

After installing the driver, the controller 150 stores the information on whether the driver has been installed in the memory 130. Then, the controller 150 transmits video signals, audio signals, control signals and other data signals to the display apparatus 200 through the first connectors 110.

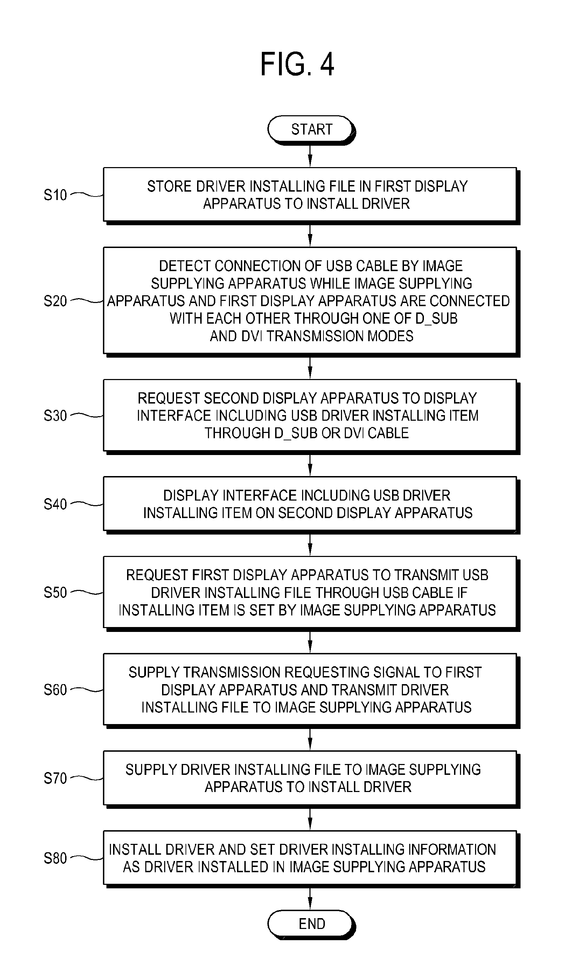

If the USB transmission method driver for the first display apparatus 200 is installed, the controller 150 may communicate with the display controller 270, i.e., the first display apparatus 200 without the D-Sub or DVI cable. If the connection between the image-supplying apparatus 100 and the first display apparatus 200 through the USB transmission method is resumed after being cut off, the controller 150 checks the driver installation information stored in the memory 130. If the driver installation information is set to "driver installed," the controller 150 does not transmit the signal requesting transmission of the driver to the first display apparatus 200. Even if the driver for the first display apparatus 200 is already installed in the computer main body 100 using the USB transmission method, a user may reinstall the driver of the first display apparatus 200 therein. FIG. 4 is a flowchart which illustrates a method of installing the driver for the first display apparatus 200 according to the exemplary embodiment of the present invention, when being initially connected with the image-supplying apparatus 100 through the USB transmission method.

As shown therein, the driver installation file is stored in the first display apparatus 200 to install the driver thereof (S10). While the second connector 120 is connected with the second display apparatus 300 through at least one of D-Sub and DVI transmission methods, the image-supplying apparatus 100 detects the connection of the USB cable (S20). The image-supplying apparatus 100 requests the second display apparatus 300 to display the interface screen including the USB driver installation item, through the D-Sub or DVI cable (S30). The second display apparatus 300 displays the interface screen including the USB driver installation item (S40). If the installation item is selected, the image-supplying apparatus 100 requests the first display apparatus 200 to transmit the USB driver installation file (S50). The first display apparatus 200 receives the transmission request signal, and transmits the USB driver installation file to the image-supplying apparatus 100 through the USB cable (S60). The image-supplying apparatus 100 receives the driver installation file, and installs the driver of the display apparatus 200 (S70). After installing the driver, the image-supplying apparatus 100 sets the driver installation information to "driver installed" (S80).

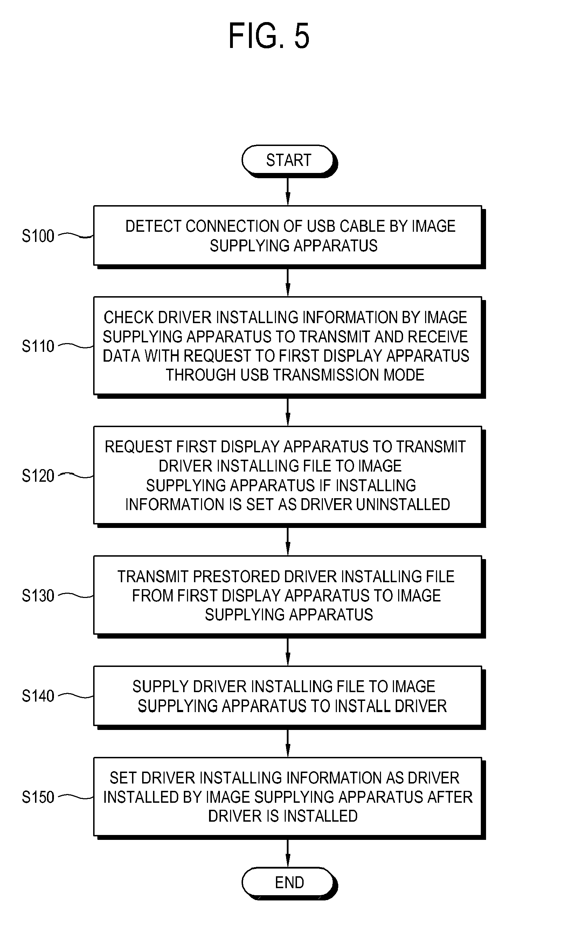

FIG. 5 is a flowchart which illustrates a method of installing the driver for the first display apparatus according to the exemplary embodiment of the present invention, when the connection between the image-supplying apparatus and the first display apparatus is resumed through the USB transmission method after having been cut off.

As shown therein, the image-supplying apparatus 100 detects the connection of the USB cable (S100). The image-supplying apparatus 100 checks the driver installation information to transmit and receive data with respect to the first display apparatus 200 through the USB transmission method (S110). If the installation information is set to "driver not installed", the image-supplying apparatus 100 requests the first display apparatus 200 to transmit the driver installation file (S120). The first display apparatus 200 transmits the pre-stored driver installation file to the image-supplying apparatus 100 (S130). The image-supplying apparatus 100 receives the driver installation file, and installs the driver for the display apparatus 200 (S140). After the driver for the display apparatus 200 is installed, the image-supplying apparatus 100 sets the driver installation information to "driver installed" (S150).

As described above, the present invention provides a display apparatus which does not utilize an additional storage medium to install a driver, a method for reinstalling a driver without difficulty even if a connection with an image-supplying apparatus is resumed after having been cut off, and a method for installing a driver for the display apparatus.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus, comprising:
a display unit which displays an image thereon;
a first communicator which communicates with an image-supplying apparatus supplying an image to be displayed on the display unit;
a display memory which stores a driver installation file therein to display the image; and
a display controller which controls the first communicator to transmit the driver installation file stored in the display memory to the image-supplying apparatus.

2. The display apparatus according to claim 1, wherein the display controller installs the driver in response to a user's command supplied from the image-supplying apparatus.

3. The display apparatus according to claim 2, wherein the image-supplying apparatus comprises a personal computer.

4. The display apparatus according to claim 2, further comprising an interface generator which generates a user interface screen concerning the driver installation file on the display unit according to the control of the display controller.

5. The display apparatus according to claim 1, wherein the display controller transmits the driver installation file to the image-supplying apparatus if the image-supplying apparatus is connected with the display apparatus through the first communicator.

6. The display apparatus according to claim 1, wherein the display controller transmits the driver installation file to the image-supplying apparatus if the display apparatus receives a request signal from the image-supplying apparatus through the first communicator.

7. The display apparatus according to claim 6, wherein the display controller does not transmit the driver installation file to the image-supplying apparatus if the request signal is not received from the image-supplying apparatus after the communication is resumed with the image-supplying apparatus through the first communicator.

8. The display apparatus according to claim 7, wherein the display controller stores transmission information on the driver installation file, and transmits the driver installation file to the image-supplying apparatus based on the stored transmission information on the driver installation file.

9. The display apparatus according to claim 1, wherein the first communicator communicates with the image-supplying apparatus through a universal serial bus (USB) transmission method.

10. The display apparatus according to claim 9, further comprising an image processor which processes an image supplied by the image-supplying apparatus through the first communicator.

11. The display apparatus according to claim 1, further comprising a second communicator which communicates with the image-supplying apparatus in a transmission method different from that of the first communicator, wherein
the display controller controls the image processor to process an image supplied by the image-supplying apparatus and display the image on the display unit.

12. The display apparatus according to claim 11, wherein the second communicator comprises at least one of a digital visual interface (DVI) transmission method to transmit and receive digital and analog signals, and a D-Sub transmission method to transmit and receive an analog signal.

13. A method driving a display apparatus which displays an image being supplied from an image-supplying apparatus, the method comprising steps of:
transmitting a driver installation file stored in the display apparatus to the image-supplying apparatus; and
(b) displaying an image based on a video signal received by a transmission method previously set in the image-supplying apparatus.

14. The method according to claim 13, wherein the step of (a) comprises allowing the driver installation file to be transmitted and installed to the image-supplying apparatus, and allowing the image-supplying apparatus to store information on whether the driver has been installed in the image-supplying apparatus.

15. The method according to claim 13, wherein the display apparatus and the image-supplying apparatus communicate with each other through a universal serial bus (USB) transmission method.

16. The method according to claim 14, wherein the display apparatus and the image-supplying apparatus communicate with each other through a universal serial bus (USB) transmission method.

17. An image-supplying apparatus, comprising:
a first connector which transmits and receives data with respect to a display apparatus; and
a controller which receives a driver installation file from the display apparatus through the first connector and installs the driver if the image-supplying apparatus is connected with the display apparatus through the first connector.

18. The image-supplying apparatus according to claim 17, wherein the controller stores information on whether the driver has been installed, after having installed the driver.

19. The image-supplying apparatus according to claim 18, wherein the first connector communicates with the display apparatus through the USB transmission method.

20. The image-supplying apparatus according to claim 19, wherein the first connector communicates with the display apparatus through the USB transmission method.

21. The image-supplying apparatus according to claim 20, further comprising a second connector which communicates with the display apparatus through a transmission method different from that of the first connector, wherein
the controller transmits image data to the display apparatus through at least one of the first and second connectors.
